# EUROPÄISCHE PATENTANMELDUNG

(11) **EP 1 557 442 A1**
(43) Veröffentlichungstag der Anmeldung: **27.07.2005**
(21) Anmeldenummer: 04100254.4
(22) Anmeldetag: 23.01.2004
(51) Int. Cl.: C08K 3/26, C08K 9/04

(54) **Verfahren zur Oberflächenbehandlung von gefälltem Calciumcarbonat**

(71) Anmelder: SOLVAY (Société Anonyme), 1050 Bruxelles (BE)
(72) Erfinder: Nover, Christoph, 47497 Rheinberg (DE); Schinninger, Kurt, 5400 Hallein (AT)
(74) Vertreter: Jacques, Philippe

(57) **Zusammenfassung**

Die Erfindung betrifft ein Verfahren zur Oberflächenbehandlung von gefälltem Calciumcarbonat.

Erfindungsgemäß wird das Calciumcarbonat nach einer ersten Oberflächenbehandlung mit z.B. Fettsäuren oder Fettalkolholen in einem zweiten Verfahrensschritt mit einem zweiten Coatingmittel in Kontakt gebracht.

Als zweites Coatingmittel werden mehrwertige Alkohole oder Alkoholgruppen enthaltende Substanzen oder Ester aufgebracht.

## Beschreibung

Die Erfindung betrifft ein Verfahren zur Oberflächenbehandlung von gefälltem Calciumcarbonat, das als funktionaler Füllstoff geeignet ist und sich durch definierte Eigenschaften auszeichnet.

Eine typisches Anwendungsgebiet ist seine Verwendung als Füllstoff in z.B. Plastisolen, Unterbodenschutzmassen für Automobile, Dichtungsmassen, Klebstoffen, Polymeren, Kautschuk und Druckfarben. Das gefällte, oberflächenbehandelte Calciumcarbonat ist hier in der Lage, das Fließverhalten der Massen sowie die mechanischen Eigenschaften der ausgehärteten Massen zu steuern. So können durch Einsatz geeigneter oberflächenbehandelter Calciumcarbonate Massen mit sehr unterschiedlichem Fließverhalten hergestellt werden.

Als ein typisches Charakteristikum für die anwendungstechnischen Eigenschaften von Calciumcarbonaten als Füllstoff wird üblicherweise die Fließgrenze nach Bingham im Weichmachergemisch (SEB) angegeben. Je nach Anwendungszweck können sehr hohe, mittlere oder niedrige Fließgrenzen gewünscht sein. Die Fähigkeit des oberflächenbehandelten Calciumcarbonates, die Fließgrenzen zu steuern, wird unter anderem durch die Oberflächenbehandlung beeinflusst. Des Weiteren zeichnen sich die oberflächenbehandelten Calciumcarbonate durch eine ausgezeichnete Dispergierbarkeit aus. Die sehr feinen Kristalle des Calciumcarbonates neigen im Allgemeinen zur Agglomeration. Bei der Einarbeitung dieser oberflächenbehandelten Calciumcarbonate müssen diese Agglomerate soweit wie möglich aufgebrochen werden, was durch eine Oberflächenbehandlung deutlich vereinfacht wird.

Natürlich vorkommende Calcite oder Aragonite sind auch fein aufgemahlen wegen ihrer geringen Oberfläche in ihrer Anwendungsbreite unbefriedigend.

Synthetisch hergestelltes Calciumcarbonat erfüllt wesentlich besser die Anforderungen für seine Verwendung als funktionaler Füllstoff oder Additiv.

Üblicherweise wird Calciumcarbonat durch Umsetzung von Calciumhydroxid mit Kohlendioxid hergestellt.

Es ist bekannt, dass die verarbeitungstechnischen Eigenschaften von gefälltem Calciumcarbonat durch Coating mit Fettsäuren, Wachsen, anorganischen Salzen usw. beeinflusst werden können.

So kann durch das Coating z.B. die Lagerstabilität von Dichtungsmassen verbessert werden oder die Benetzbarkeit der Calciumcarbonate mit organischer Matrix, wie dies bei der Einarbeitung der Füllstoffe in Massen notwendig ist, oder die Fließgrenze, oder die Dispergierbarkeit beeinflusst werden.

Es ist ebenfalls bekannt, dass Calciumcarbonat, insbesondere Kreide in Gegenwart von oberflächenaktiven Stoffen wie z.B. synthetische oder natürliche Fettsäuren, Fettalkohole oder Wachse zu mahlen, um ein Verkleben (Agglomerieren) der feinen Calciumpartikel zu vermeiden. (DE 958 839).

Die EP 1 279 433 offenbart ein Verfahren zur Verbesserung der Eigenschaften von körnigen Materialen, z.B. Natriumpercarbonat durch Mehrfachbeschichtung mit an sich bekannten Coatingmitteln. Hierbei bildet das Coatingmaterial auf den Partikeln eine Coatingmatrix, wobei keine vollständige Umhüllung der Partikel mit dem Coatingmaterial erfolgt.

Die Aufgabe der Erfmdung besteht darin, Calciumcarbonat mit verbesserten Eigenschaften, insbesondere mit verbesserten Fließeigenschaften und verbesserter Dispergierbarkeit und ein Verfahren zu seiner Herstellung bereitzustellen. Die Aufgabe wird durch die in den Anspruchen angegebene Erfindung gelöst.

Das Erfindungsgemäße Verfahren zur Oberflächenbehandlung von gefälltem Calciumcarbonat, bei dem ein Coatingmittel auf die Calciumcarbonatpartikel aufgebracht wird, sieht vor, dass die Calciumcarbonatpartikel zunächst mit einem ersten Coatingmittel in Kontakt gebracht werden und danach ein zweites Coatingmittel aufgebracht wird.

Ein bevorzugte Ausführungsform sieht vor, dass die Calciumcarbonatpartikel zunächst in bekannter Art und Weise mit gesättigten oder ungesättigten Carbonsäuren, z.B. Fettsäuren, substituierten Fettsäuren, deren Salze oder Ester oder Fettalkohole z.B.einwertige Alkohole mit 8-22 Kohlenstoffatomen oder mehrwertige Alkohole z. B. Glycerin, um nur einige der geeigneten Stoffe zu nennen, gecoatet werden. Das Calciumcarbonat wird in an sich bekannter Weise mit dem ersten Coatingmittel in flüssiger oder fester Form z.B. während des Mahlvorganges und/oder nach der Fällung kontaktiert, wobei das Coatingmittel auf der Oberfläche des Calciumcarbonates festgehalten wird.

Das gecoatete Calciumcarbonat wird erfindungsgemäß mit einer zweiten Coatingschicht versehen, indem als zweite Coatingschicht mehrwertige Alkohole, vorzugsweise Glycerin oder Ethylenglykol, oder mehrwertige substituierte Alkohole z.B. Alkoholgruppen enthaltende Substanzen, Ester von Carbonsäuren, vorzugsweise Phthalsäureester auf die gecoateten Calciumcarbonatpartikel aufgebracht werden.

Das gecoatete Calciumcarbonat wird wieder in an sich bekannter Weise mit dem zusätzlichen Coatingmittel in flüssiger, gelöster oder fester Form kontaktiert, wobei das zweite Coatingmittel auf der Oberfläche des Calciumcarbonates festgehalten wird. Wir haben gefunden, dass die nach dem ersten Coating verbliebenen freien Stellen auf der CaCO₃-Oberfläche durch das zweite Coatingmittel besetzt werden.

Es ist im Sinne der Erfindung, dass die erste und die zweite Coatingschicht aus unterschiedlichen als auch aus gleichem Material sein kann.

In einer bevorzugten Ausführungsform werden die gefällten Calciumcarbonatpartikel zunächst mit Stearinsäure bzw. Stearinsäurederivaten gecoatet und danach eine zweite Coatingschicht mit Glycerin als zweites Coatingmittel auf die bereits gecoateten Calciumcarbonatpartikel aufgebracht.

Ein weitere Gegenstand der Erfindung sind die nach dem Verfahren erhältlichen zweifach gecoatete Calciumcarbonatpartikel. Die Erfindungsgemäßen zweifach gecoatete Calciumcarbonatpartikel sind dadurch gekennzeichnet dass die erste Coatingschicht gesättigte oder ungesättigte Carbonsäuren, z.B. Fettsäuren oder substituierte Fettsäuren; Fettalkohole oder mehrwertige Alkohole enthält oder daraus besteht und die zweite Coatingschicht mehrwertige Alkohole oder substituierte mehrwertige Alkohole enthält oder daraus besteht.

Bevorzugte zweifach gecoatete Calciumcarbonatpartikel sind dadurch gekennzeichnet dass die zweite Coatingschicht Glycerin enthält oder daraus besteht.

Alternative zweifach gecoatete Calciumcarbonatpartikel sind dadurch gekennzeichnet dass die zweite Coatingschicht Ethylenglykol oder Alkoholgruppen enthaltende Substanzen vorzugsweise Glykole, oder Ester von Carbonsäuren, vorzugsweise Phthalsäureester enthält oder daraus besteht.

Es wurde gefunden, dass das erfmdungsgemäß zweifach gecoatete Calciumcarbonat eine bessere Dispergierfähigkeit besitzt. Es neigt weniger zur Agglomeratbildung. Gegebenenfalls vorhandene Agglomerate des oberflächenbehandelten Calciumcarbonates dispergieren bei der Einarbeitung in Massen schnell.

Durch das zusätzliche Coating kann die Fließgrenze in einem sehr breiten Bereich variiert werden, wobei so hohe Werte einstellbar sind, die ohne zusätzliches zweites Coating nicht erreichbar wären. Für bestimmte Verwendungszwecke des gecoateten Calciumcarbonates kann gegebenenfalls das alleinige Coaten mit mehrwertigem Alkohol schon ausreichen, um die vom Endverbraucher gewünschten Eigenschaften zu erzielen.

Die Fließgrenze von mit Fettsäure gecoateten CaCO₃ ist z.B. im Bereich von 30 Pa bis 350 Pa steuerbar. Durch das zusätzliche Coaten mit mehrwertigen Alkoholen oder substituierten mehrwertigen Alkoholen kann eine Erhöhung der Fließgrenze bis auf über 1000 Pa erreicht werden.

Weiterhin ist eine Korrektur der Fließgrenze nach dem ersten Coating möglich. Sollte nach dem ersten Coating die gemessene Fließgrenze nicht dem gewünschten Wert entsprechen, so kann durch gezieltes zusätzliches Coating dieser gewünschte Wert nachträglich eingestellt werden.

Die Vorteile für den Anwender bestehen zunächst in einer Erhöhung der Konstanz der Fließgrenze. Durch das zusätzliche Coating kann eine sehr konstante Qualität erzeugt werden, die es dem Anwender erlaubt, mit festen Rezepturen zu arbeiten. Eine nachträgliche Einstellung des Fließverhaltens der Massen wird überflüssig. Des Weiteren beschleunigt sich der Dispergiervorgang, so dass zum einen die Verarbeitungskapazität des Anwenders steigt, zum anderen aber auch bessere Oberflächenglätten der Massen erzielt werden. Weiterhin kann bei Einsatz von oberflächenbehandeltem Calciumcarbonat mit sehr hoher Fließgrenze der Anteil an Calciumcarbonat in der Dichtungsmasse reduziert werden, was einen positiven Effekt auf das spezifische Gewicht der Masse hat. Gerade im Automobilbereich werden Dichtungsmassen, Unterbodenschutzmassen und Klebstoffe mit niedriger Dichte bevorzugt.

### Beispiel 1: Herstellung gefälltes Calciumcarbonat (CCP).

In einem Behälter wurde Kalkmilch mit einer Konzentration von 150 g/1 Calciumhydroxid auf 18 °C temperiert. Nach Erreichen dieser Starttemperatur wurde CO₂ in den Behälter eingeleitet, wobei die CO₂-Zufuhr konstant gehalten wurde.
CO₂-Luftgemisch : 30:70
CO₂-Zufuhr : 1m³/h (bezogen auf 10 l Kalkmilch)
Fällzeit : 100 min

### Beispiel 2: Vorbereitung des 1. Coatingmittels

1035 g Wasser wurden auf 75 °C erhitzt, 122 g Stearinsäure hinzugefügt. Diese Mischung wurde 15 min erhitzt. Unter Rühren wurden 60 ml 25 %-ige Ammoniaklösung hinzugefügt und die Mischung 30 min homogenisiert. Die helle homogenen Emulsion enthielt 10 Gew.-% Stearinsäure.

### Beispiel 3 : 1. Coating

In je 201 der gemäß Beispiel 1 hergestellten Calciumcarbonatsuspension wurde das gemäß Beispiel 2 vorbereitete Coatingmittel eingetragen und die Mischung 1 Stunde bei 75 °C gerührt.

Das gecoatete Calciumcarbonat wurde abgetrennt, getrocknet und gemahlen. Das so gecoatete Calciumcarbonat enthielt 3 Gew.-% Stearatcoating.

### Beispiel 4: 2. Coating

Glycerin wurde im Verhältnis 1:3 in Wasser gelöst und auf die gefällten Calciumcarbonatpartikel (ungecoatet und gecoatet) aufgesprüht.

Die Proben wurden bei 50 °C getrocknet und danach bei 18 000 U/min in einer Stiftmühle gemahlen.

Das Fließverhalten des gecoateten CaCO₃ wurde nach der Methode Bingham bestimmt.

### Beispiel 5:

Gefälltes Calciumcarbonat gemäß Beispiel 1 wurde mit unterschiedlichen Glycerinmengen gecoatet und das Fließverhalten bestimmt.

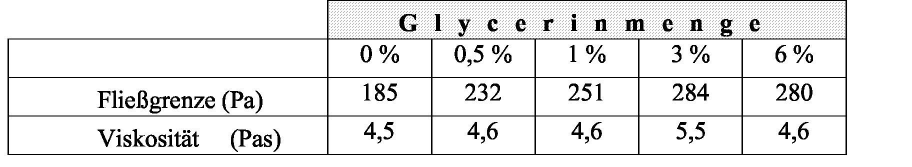

### Beispiel 6

Gefälltes Calciumcarbonat (Beispiel 1) wurde mit 2 g Stearinsäure pro 100 g Calciumcarbonat analog Beispiel 3 gecoatet. Als zweite Coatingschicht wurden unterschiedliche Glycerinmengen aufgebracht und das Fließverhalten bestimmt.

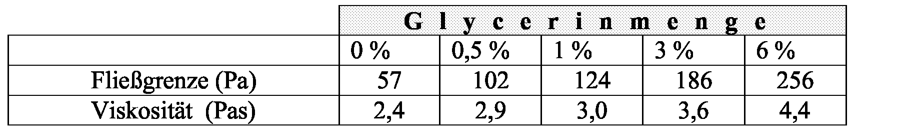

### Beispiel 7:

Gefälltes Calciumcarbonat (Beispiel 1 ) wurde mit 3 g Stearinsäure pro 100 g Calciumcarbonat analog Beispiel 3 gecoatet. Als zweite Coatingschicht wurden unterschiedliche Glycerinmengen aufgebracht und das Fließverhalten bestimmt.

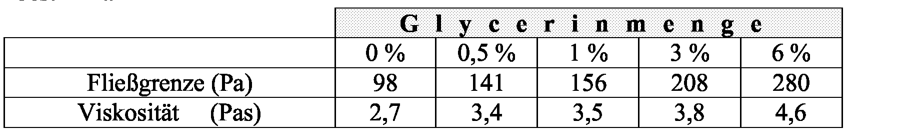

### Beispiel 8:

Die Dispergierbarkeit der erfindungsgemäß gecoateten CaCO₃-Partikel wurde durch Laserlichtstreuung bestimmt.

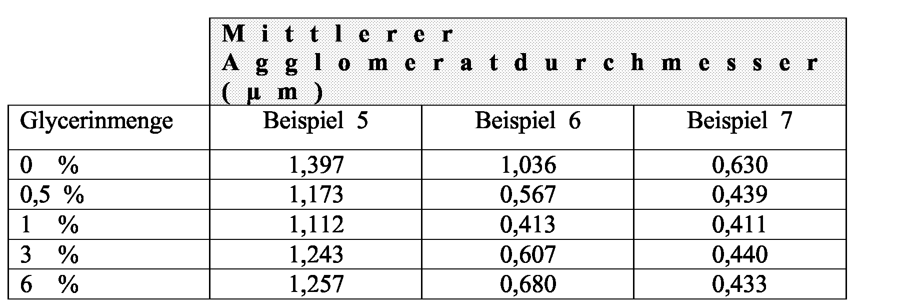

Die Ergebnisse zeigen, dass durch das erfindungsgemäße zweite Coating die Fließgrenze, Viskosität und Dispergierbarkeit gesteuert werden kann.

## Patentansprüche

1. Verfahren zur Oberflächenbehandlung von gefälltem Calciumcarbonat, bei dem ein Coatingmittel auf die Calciumcarbonatpartikel aufgebracht wird, **dadurch gekennzeichnet, dass** die Calciumcarbonatpartikel zunächst mit einem ersten Coatingmittel in Kontakt gebracht werden und danach ein zweites Coatingmittel aufgebracht wird.

2. Verfahren zur Oberflächenbehandlung von Calciumcarbonat nach Anspruch 1, **dadurch gekennzeichnet, dass** als erstes Coatingmittel gesättigte oder ungesättigte Carbonsäure, z.B. Fettsäuren, substituierte Fettsäuren, deren Salze oder Ester oder Fettalkohole, wie einwertige Alkohole mit 8-22 Kohlenstoffatomen oder mehrwertige Alkohole verwendet werden.

3. Verfahren zur Oberflächenbehandlung von Calciumcarbonat nach Anspruch 1 und 2, **dadurch gekennzeichnet, dass** als zweites Coatingmittel mehrwertige Alkohole insbesondere Glycerin oder Ethylenglykol oder substituierte mehrwertige Alkohole verwendet werden.

4. Verfahren zur Oberflächenbehandlung von Calciumcarbonat nach Anspruch 1 bis 3, **dadurch gekennzeichnet, dass** das zweite Coatingmittel in flüssiger, gelöster oder fester Form aufgebracht wird.

5. Zweifach gecoatete Calciumcarbonatpartikel, **dadurch gekennzeichnet, dass** die erste Coatingschicht gesättigte oder ungesättigte Carbonsäuren, z.B. Fettsäuren oder substituierte Fettsäuren; Fettalkohole oder mehrwertige Alkohole enthält oder daraus besteht und die zweite Coatingschicht mehrwertige Alkohole oder substituierte mehrwertige Alkohole enthält oder daraus besteht.

6. Zweifach gecoatete Calciumcarbonatpartikel nach Anspruch 5, **dadurch gekennzeichnet, dass** die zweite Coatingschicht Glycerin enthält oder daraus besteht.

7. Zweifach gecoatete Calciumcarbonatpartikel nach Anspruch 5, **dadurch gekennzeichnet, dass** die zweite Coatingschicht Ethylenglykol oder Alkoholgruppen enthaltende Substanzen vorzugsweise Glykole, oder Ester von Carbonsäuren, vorzugsweise Phthalsäureester enthält oder daraus besteht.
